# EUROPÄISCHE PATENTANMELDUNG

(11) **EP 2 323 312 A1**
(43) Veröffentlichungstag der Anmeldung: **18.05.2011**
(21) Anmeldenummer: 09175703.9
(22) Anmeldetag: 11.11.2009
(51) Int. Cl.: H04L 12/26

(54) **System aus einem Mobilfunksystem mit mindestens einer ersten und einer zweiten Basisstation und mindestens einer Analysevorrichtung, Messdatenmodul, Analysevorrichtung und Verfahren zur Gewinnung mindestens eines Betriebsparameters eines Mobilfunksystems**

(71) Anmelder: Tektronix International Sales GmbH, 8212 Neuhausen (CH)
(72) Erfinder: Klopfer, Armin, 14624, Dallgow (DE); Kreher, Ralf, 12587, Berlin (DE); Plogsties, Jens, 10407, Berlin (DE); Gänger, Karsten, 12309, Berlin (DE)
(74) Vertreter: Schurack, Eduard F.

(57) **Zusammenfassung**

Die vorliegende Erfindung betrifft ein System aus einem Mobilfunksystem mit mindestens einer ersten und einer zweiten Basisstation (10) und mindestens einer Analysevorrichtung (20), wobei die erste und die zweite Basisstation (10) jeweils mindestens eine Antenne zur Kommunikation mit mindestens einem mobilen Teilnehmer (MT) über eine Luftschnittstelle (Uu) umfassen, wobei die Kommunikation mit einem mobilen Teilnehmer (MT) durch Luftschnittstellenparameter charakterisiert ist, wobei die erste und die zweite Basisstation (10) über einen Transportkanal (12) mit zumindest einem übergeordneten Netzelement (MME; 16) des Mobilfunksystems vernetzt sind, wobei mindestens ein Betriebsparameter in der ersten und der zweiten Basisstation (10) in Form mindestens eines Basisstationsparameters und/oder mindestens eines Luftschnittstellenparameters vorliegt, wobei auf dem Transportkanal (12) eine erste logische Schnittstelle (22) abgebildet ist, die ausgelegt ist, zumindest die erste und die zweite Basisstation (10) mit einem übergeordneten Netzelement (MME; 16) zu vernetzen, sowie eine zweite logische Schnittstelle (24), die ausgelegt ist, zumindest die erste mit der zweiten Basisstation (10) zu vernetzen, wobei die Analysevorrichtung (20) mit dem Transportkanal (12) gekoppelt ist, und auf dem Transportkanal (12) eine dritte logische Schnittstelle (26) abgebildet ist, die ausgelegt ist, den zumindest einen Betriebsparameter der mindestens einen Basisstation (10) an die Analysevorrichtung (20) zu übertragen. Die vorliegende Erfindung betrifft überdies ein entsprechendes Messdatenmodul, eine entsprechende Analysevorrichtung sowie ein entsprechendes Verfahren zur Gewinnung mindestens eines Betriebsparameters eines Mobilfunksystems.

## Beschreibung

Die vorliegende Erfindung betrifft ein System aus einem Mobilfunksystem mit mindestens einer ersten und einer zweiten Basisstation und mindestens einer Analysevorrichtung, wobei die erste und die zweite Basisstation jeweils mindestens eine Antenne zur Kommunikation mit mindestens einem mobilen Teilnehmer über eine Luftschnittstelle umfassen, wobei die Kommunikation mit einem mobilen Teilnehmer durch Luftschnittstellenparameter charakterisiert ist, wobei die erste und die zweite Basisstation über einen Transportkanal mit zumindest einem übergeordneten Netzelement des Mobilfunksystems vernetzt sind, wobei mindestens ein Betriebsparameter in der ersten und der zweiten Basisstation in Form mindestens eines Basisstationsparameters und/oder mindestens eines Luftschnittstellenparameters vorliegt, wobei auf dem Transportkanal eine erste logische Schnittstelle abgebildet ist, die ausgelegt ist, zumindest die erste und die zweite Basisstation mit einem übergeordneten Netzelement zu vernetzen, sowie eine zweite logische Schnittstelle, die ausgelegt ist, zumindest die erste mit der zweiten Basisstation zu vernetzen. Sie betrifft überdies ein entsprechendes Messdatenmodul für ein Mobilfunksystem sowie eine entsprechende Analysevorrichtung für ein Mobilfunksystem. Weiterhin betrifft die vorliegende Erfindung ein entsprechendes Verfahren zur Gewinnung mindestens eines Betriebsparameters eines Mobilfunksystems. Der gegenwärtige Mobilfunkstandard UMTS (Universal Mobile Telecommunications System) steht für den Mobilfunkstandard der dritten Generation, mit dem Datenübertragungsraten bis zu 7,2 Mbit/s möglich sind. Sein Nachfolger ist unter der Bezeichnung LTE (Long Term Evolution) bekannt und verwendet Orthogonal-Frequency-Division-Multiplexing-Techniken sowie Multiple-Input-Multiple-Output-Antennen-Technologie. Damit soll es Mobilfunkanbietern möglich sein, kostengünstig hochratige Datendienste anzubieten und so das mobile Internet zum Massenmarkt zu machen. Die geringen Latenzzeiten bei LET erlauben die Übertragung von Sprachdiensten und Videotelefonie über das Internetprotokoll sowie den Einsatz zeitkritischer Anwendungen, zum Beispiel Online-Spielen.

Gegenüber der alternativen Technologie WiMAX soll LTE den Mobilfunkanbietern einen kostengünstigen evolutionären Migrationspfad von UMTS zu LTE ermöglichen. LTE unterstützt im Gegensatz zu UMTS verschiedene Bandbreiten und kann so flexibel in unterschiedlichen zukünftigen Spektren eingesetzt werden. LTE zeichnet sich überdies durch den Wegfall von bisher bekannten Netzelementen und den zugehörigen Schnittstellen aus. Die bisher genutzten zentralen Strukturen zur Steuerung von Mobilfunkbasisstationen werden in dezentrale Strukturen aufgelöst, das heißt die Funktionen eines zentralen Netzelements zum Steuern von Basisstationen, die in LTE die Bezeichung e-Nodes tragen, werden auf die einzelnen Basisstationen aufgeteilt.

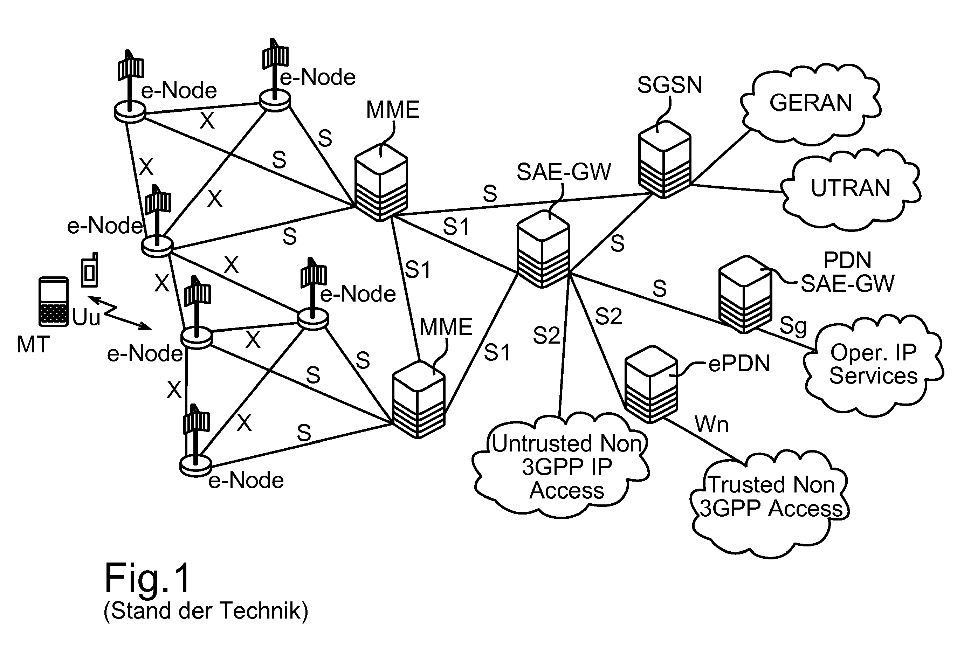

Fig. 1 zeigt die bekannte dezentrale Netzwerkarchitektur eines LTE-Mobilfunksystems. Die Basisstationen, e-Nodes, sind über einen Transportkanal mit zumindest einem übergeordneten Netzelement, vorliegend MME (Mobile Management Entity) des Mobilfunksystems vernetzt. Auf diesem Transportkanal ist eine erste logische Schnittstelle abgebildet, die in Fig. 1 mit "S" bezeichnet ist. Auf dem Transportkanal ist weiterhin eine zweite logische Schnittstelle abgebildet, die ausgelegt ist, die Basisstationen untereinander zu vernetzen. In Fig. 1 ist diese Schnittstelle mit "X" bezeichnet. Über die logische Schnittstelle X können die Basisstationen untereinander relevante Informationen austauschen. Das in der Fig. 1 dargestellte Netzelement MME steuert nur noch die Gesprächsübergänge von einer Basisstation zur anderen.

Bezeichnend für die dezentrale Struktur ist, dass die Verwaltung und Steuerung von mobilen Teilnehmern MT nur noch von den Basisstationen übernommen wird. Alle Netzelemente hinter der Basisstation werden von den Prozessen nicht informiert. Keine Mitteilungen und Messungen werden weitergeleitet. Das hat zur Folge, dass es keine Möglichkeit gibt, Informationen über Basisstationsparameter und Terminalverhalten, also Luftschnittstellenparameter, d.h. Parameter an der Luftschnittstelle Uu, beispielsweise zu Überwachungs- und Analysezwecken zentral und netzweit zu erhalten.

Im Gegensatz hierzu werden beispielsweise bei einem GSM-Netz die Luftschnittstellenparameter von der Basisstation durchgeleitet, so dass sie am RNC zur Verfügung stehen. Zu Analyse- und Überwachungszwecken genügt es daher beim GSM-Netz, die Analyse- beziehungsweise Überwachungsvorrichtung mit den Schnittstellen der RNCs zu verbinden. Beim LTE-Netz funktioniert diese Vorgehensweise nicht, da quasi alle für die Analyse interessanten Protokolle bereits in der jeweiligen Basisstation enden und nicht zu übergeordneten Netzelementen transportiert werden.

Diese dezentrale Architektur des LTE-Netzes bedingt daher auch eine dezentrale Messprozedur. Bekannte Ansätze basieren deshalb darauf, dass mithilfe eines kommerziellen Test-Terminals Luftschnittstellenparameter gemessen wurden. Ein dafür geeignetes Test-Terminal muss zu diesem Zweck mit einer eigenen Empfangsanlage einschließlich Antenne ausgerüstet sein. Die dabei gemessenen Parameter werden ungefiltert an eine Analysevorrichtung weitergereicht. Dabei dient ein eigenständiges Datentransportnetzwerk als Schnittstelle zwischen Test-Terminal und Analysevorrichtung. Dieses bekannte Verfahren kann jedoch aus Kosten- und Effizienzgründen nur in einer Mobilfunkzelle angewendet werden. Dadurch ist es unmöglich, eine komplette Netzsicht zu einem gewählten Zeitpunkt oder über eine vorgebbare Dauer zu erhalten.

Die Aufgabe der vorliegenden Erfindung besteht deshalb darin, ein gattungsgemäßes System aus einem Mobilfunksystem mit mindestens einer ersten und einer zweiten Basisstation und mindestens einer Analysevorrichtung derart weiterzubilden, dass auf möglichst kostengünstige Weise eine Netzsicht unter Berücksichtigung möglichst vieler Netzelemente zu einem gewählten Zeitpunkt oder über eine vorgebbare Dauer bereitstellbar ist. Die Aufgabe besteht weiterhin darin, ein entsprechendes Verfahren zur Gewinnung mindestens eines Betriebsparameters eines Mobilfunksystems zur Verfügung zu stellen sowie ein entsprechendes Messdatenmodul und eine entsprechende Analysevorrichtung.

Diese Aufgaben werden gelöst durch ein System mit den Merkmalen von Patentanspruch 1, ein Messdatenmodul mit den Merkmalen von Patentanspruch 12, eine Analysevorrichtung mit den Merkmalen von Patentanspruch 13 sowie ein Verfahren mit den Merkmalen von Patentanspruch 14.

Die vorliegende Erfindung basiert auf der Erkenntnis, dass der Transportkanal, der die Basisstationen mit zumindest einem übergeordneten Netzelement des Mobilfunksystems bzw. die Basisstationen untereinander verbindet, zur Übertragung zumindest eines Betriebsparameters mindestens einer Basisstation an die Analysevorrichtung genutzt werden kann, wenn auf diesem Transportkanal eine dritte logische Schnittstelle abgebildet wird. Diese dritte logische Schnittstelle kann dazu benutzt werden, von der jeweiligen Basisstation erhobene Messdaten zu einer zentralen Analysevorrichtung weiterzuleiten. Dazu werden bevorzugt auf der Basisbandverarbeitungsplattform einer Basisstation die jeweiligen Messwerte ausgekoppelt und so zur Verfügung gestellt, dass diese das Protokoll der dritten logischen Schnittstelle unterstützen. Die Erweiterung der Basisbandverarbeitungsplattform um diese dritte logische Schnittstelle stellt einen sehr geringen Aufwand dar, da die gewünschten Luftschnittstellenparameter an der Basisstation vorliegen und dort bereits zu internen Verarbeitungsprozessen genutzt werden.

Dadurch, dass die Analysevorrichtung erfindungsgemäß mit dem Transportkanal gekoppelt ist, kann sie über die dritte logische Schnittstelle Messdaten von einer Vielzahl von Basisstationen gleichzeitig empfangen und somit, unabhängig von Betreiber und Hersteller, Daten über die Netzqualität analysieren und aufzeichnen. Dadurch ist die Bereitstellung einer Netzsicht unter Berücksichtigung einer vorgebbaren Anzahl von Netzelementen zu einem gewählten Zeitpunkt oder über eine vorgebbare Dauer möglich und nicht mehr auf eine Mobilfunkzelle beschränkt.

Durch die Erfindung können aufwändige Test-Terminal-Messverfahren in jeder Mobilfunkzelle vermieden werden. Es muss kein zusätzliches Transportnetzwerk installiert werden, da eine bereits vorhandene physikalische Leitung für die vorliegende Erfindung genutzt werden kann.

Bei einer bevorzugten Ausführungsform ist mindestens einer Basisstation ein Messdatenmodul zugeordnet, das mit dem Transportkanal gekoppelt ist, wobei das Messdatenmodul ausgelegt ist, den zumindest einen Betriebsparameter der zugeordneten Basisstation auszukoppeln und an der dritten logischen Schnittstelle bereitzustellen. Dadurch, dass einer Basisstation ein Messdatenmodul zugeordnet wird, entfällt ein separates Messen durch das Messdatenmodul an der Luftschnittstelle. Vielmehr kann dadurch das Messdatenmodul auf die in der Basisstation vorliegenden Luftschnittstellenparameter zugreifen, ohne dass hierfür eine Empfangsvorrichtung einschließlich Antenne, Verstärker etc. für das Messdatenmodul zusätzlich vorgesehen werden müsste.

Das jeweilige Messdatenmodul kann in die jeweilige Basisstation integriert sein, wodurch eine separate Verkabelung, beispielsweise zur Stromversorgung, des Messdatenmoduls verzichtbar wird. Insbesondere kann das Messdatenmodul über die Basisstation, insbesondere über die Basisbandverarbeitungsplattform, mit dem Transportkanal gekoppelt sein.

Es kann jedoch auch vorgesehen sein, dass das Messdatenmodul außerhalb der Basisstation angeordnet ist. Hieraus ergibt sich der Vorteil, dass das Messdatenmodul als Zusatzvorrichtung an bereits verbaute Basisstationen angeschlossen werden kann. Allerdings ist dann für das Messdatenmodul ein separates Gehäuse sowie eine separate Energieversorgung sicherzustellen, wenngleich eine separate Empfangsvorrichtung für das Messdatenmodul verzichtbar ist.

Der Transportkanal ist bevorzugt IP (Internet Protokoll)-basiert. Dabei handelt es sich um ein weit verbreitetes Netzwerkprotokoll, das die Grundlage des Internets darstellt. Auf diese Art und Weise können sowohl die Basisstationen als auch die Analysevorrichtung mittels IP-Adressen miteinander kommunizieren. Eine einfache technische Realisierung ist damit gewährleistet.

Eine besonders bevorzugte Weiterbildung der vorliegenden Erfindung zeichnet sich dadurch aus, dass die Analysevorrichtung ausgelegt ist, über die dritte logische Schnittstelle mindestens einen Filterungsparameter an die Basisstation und/oder das Messdatenmodul zu übermitteln, wobei der Filterungsparameter ausgelegt ist, den mindestens einen an die Analysevorrichtung zu übertragenden Betriebsparameter zu spezifizieren. Dadurch werden Modifikationen an der Sendeeinheit der Basisstation vermieden, die gegebenenfalls nötig wären, wenn das Messdatenmodul sämtliche in der Basisstation vorliegenden Daten in Richtung Analysevorrichtung übertragen wollte. Durch die Möglichkeit eines skalierbaren Transportprotokolls können Daten besonders effizient an die Analysevorrichtung bereitgestellt werden. Die zu übertragende Datenmenge wird minimiert, was zur Konsequenz hat, dass die Analysezeit in der Analysevorrichtung ebenfalls minimiert wird. In Realisierungsbeispielen konnte eine Analyse in Echtzeit erreicht werden. In Abhängigkeit der Analyseergebnisse können in nachfolgenden Schritten weitere Optimierungen durch weitere Spezifizierung des mindestens einen Filterungsparameters erzielt werden. Auf diese Weise kann jeder Nutzer je nach Tiefe der von ihm durchzuführenden Analyse das Datenaufkommen auf besonders einfache Weise selbst skalieren.

Dabei kann der mindestens eine Filterungsparameter insbesondere mindestens ein bestimmtes Informationselement der Betriebsparameter und/oder mindestens einen bestimmten Nachrichtentyp der Betriebsparameter und/oder mindestens einen bestimmten Nachrichtennamen der Betriebsparameter betreffen.

Auf diese Weise kann das Datenaufkommen und damit die Analysezeit im Hinblick auf den Zweck der mittels der Analysevorrichtung gerade durchzuführenden Analyse optimiert werden.

Bei einer besonders bevorzugten Weiterbildung ist das Messdatenmodul ausgelegt, mindestens einen Betriebsparameter auszuwerten und/oder weiterzuverarbeiten, insbesondere daraus mindestens einen Key Performance Indicator zu berechnen. Dies eröffnet die Möglichkeit, dass über die dritte logische Schnittstelle nur die Ergebnisse einer im Messdatenmodul oder in der Basisstation durchgeführten Vorverarbeitung übertragen werden müssen. Dies führt zu einer weiteren Reduktion der über die dritte logische Schnittstelle zu übertragenden Daten und ermöglicht die Durchführung von Rechenoperationen dezentral seitens der Basisstationen beziehungsweise in dem der jeweiligen Basisstation zugeordneten Messdatenmodul.

Ein erfindungsgemäßes Messdatenmodul für ein Mobilfunksystem mit mindestens einer ersten und einer zweiten Basisstation und mindestens einer Analysevorrichtung zeichnet sich dadurch aus, dass das Messdatenmodul ausgelegt ist, mindestens einen Betriebsparameter einer dem Messdatenmodul zuzuordnenden Basisstation auszukoppeln und an einer Schnittstelle eines Transportkanals an die mindestens eine Analysevorrichtung bereitzustellen. Entsprechend ist eine erfindungsgemäße Analysevorrichtung für ein Mobilfunksystem mit mindestens einer ersten und einer zweiten Basisstation ausgelegt, mit mindestens einem einer Basisstation zugeordneten Messdatenmodul über eine Schnittstelle eines Transportkanals zur Übertragung mindestens eines Betriebsparameters der mindestens einen Basisstation zu kommunizieren.

Weitere vorteilhafte Ausführungsformen ergeben sich aus den Unteransprüchen.

Die mit Bezug auf das erfindungsgemäße System beschriebenen bevorzugten Ausführungsformen und deren Vorteile gelten, soweit anwendbar, entsprechend für das erfindungsgemäße Messdatenmodul, die erfindungsgemäße Analysevorrichtung sowie das erfindungsgemäße Verfahren zur Gewinnung mindestens eines Betriebsparameters eines Mobilfunksystems.

Im Nachfolgenden wird nunmehr ein Ausführungsbeispiel der vorliegenden Erfindung unter Bezugnahme auf die beigefügten Zeichnungen näher beschrieben. Es zeigen:
- Fig. 1: in schematischer Darstellung den Aufbau eines LTE-Mobilfunksystems nach dem Stand der Technik;
- Fig. 2: in schematischer Darstellung ein Ausführungsbeispiel der vorliegenden Er- findung mit einem erfindungsgemäßen Messdatenmodul und einer erfindungsgemäßen Analysevorrichtung; und
- Fig. 3: in schematischer Darstellung Beispiele zur Skalierung des Datenaufkom- mens mittels einstellbarer Filterungsparameter.

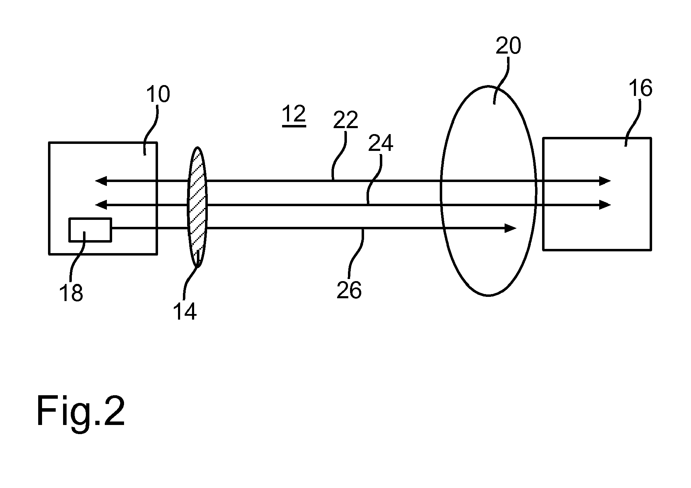

Fig. 2 zeigt in schematischer Darstellung ein Ausführungsbeispiel der vorliegenden Erfindung. Dabei ist beispielhaft eine Basisstation 10 dargestellt, die über einen Transportkanal 12, der ein physikalisches Interface 14 für mehrere logische Schnittstellen umfasst, mit dem dahinter befindlichen Netzwerk verbunden ist. Dargestellt ist nur das nächste Netzelement 16, bei dem es sich um eine weitere Basisstation oder ein in der Hierarchie höher liegendes Netzelement handeln kann. Der Transportkanal 12 ist IP-basiert. Der Basisstation 10 ist ein Messdatenmodul 18 zugeordnet, wobei das Messdatenmodul 18 in die Basisstation integriert sein kann oder außerhalb der Basisstation 10 angeordnet sein kann. Mit dem Transportkanal 12 ist überdies eine Analysevorrichtung 20 gekoppelt. Dabei kann die Analysevorrichtung 20 seriell zwischen die Basisstation 10 und das Netzelement 16 gekoppelt sein, kann jedoch auch lediglich in Form einer T-Verbindung mit dem Transportkanal 12 gekoppelt sein.

Auf dem Transportkanal 12 sind zumindest drei logische Schnittstellen abgebildet. Eine erste logische Schnittstelle 22 dient dazu, die Basisstation 10 mit einem übergeordneten Netzelement zu vernetzen. Diese Schnittstelle ist in Fig. 1 mit S bezeichnet. Eine zweite logische Schnittstelle 24 dient dazu, Basisstationen untereinander zu vernetzen. Dies ist in Fig. 1 mit X bezeichnet. In erfindungsgemäßer Weise ist auf dem Transportkanal weiterhin eine dritte logische Schnittstelle 26 abgebildet, die ausgelegt ist, zumindest einen Betriebsparameter der Basisstation 10 an die Analysevorrichtung 20 zu übertragen. Diese Schnittstelle 26 endet in der Analysevorrichtung 20.

Während in Fig. 2 lediglich eine Basisstation 10 beispielhaft mit der Analysevorrichtung 20 gekoppelt ist, sind in der Realität eine Vielzahl von Basisstationen 10 über entsprechende Schnittstellen mit der Analysevorrichtung 20 gekoppelt, so dass es möglich ist, eine Netzsicht im vorgebbaren Umfang zu einem gewählten Zeitpunkt oder über eine vorgebbare Dauer zu erhalten.

Bevorzugt ist die logische Schnittstelle 26 als bidirektionale Schnittstelle ausgelegt, so dass die Analysevorrichtung 20 mit dem Messdatenmodul 18 kommunizieren kann und umgekehrt. Insbesondere besteht daher die Möglichkeit, über die Analysevorrichtung 20 mindestens einen Filterungsparameter, zur Spezifizierung eines so genannten Trace Levels, über die logische Schnittstelle 26 am Messdatenmodul 18 einzustellen. Über die Schnittstelle 26 können Rohdaten jedoch auch bereits im Messdatenmodul 18 und/oder der Basisstation 10 aufbereitete Daten an die Analysevorrichtung 20 übermittelt werden. Der Transportkanal 12 kann als eine elektrisch leitfähige Leitung oder als eine Funkstrecke realisiert sein.

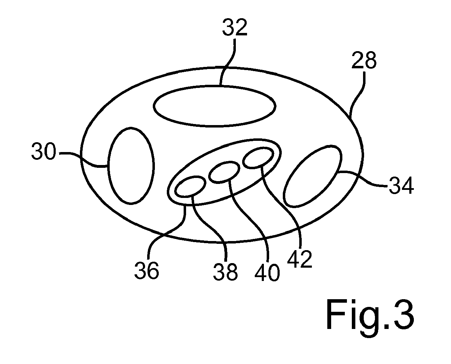

In Fig. 3 sind schematisch alle an der Basisstation vorhandenen Betriebsparameter, das heißt insbesondere Basisstationsparameter und Luftschnittstellenparameter, mit 28 bezeichnet. Durch Spezifikation von Filterungsparametern kann vorgesehen werden, dass die Basisstation 10 beziehungsweise das Messdatenmodul 18 über die Schnittstelle 26 nur bestimmte Daten weiterleitet, beispielsweise Daten 30, die den Verbindungsaufbau betreffen, Daten 32, die einen Verbindungsabbruch betreffen oder Daten 34, die einen Nachrichtennamen betreffen. Es kann sich jedoch auch um Daten 36 handeln, die aus der Kommunikation mit einem mobilen Teilnehmer MT, siehe Fig. 1, berechnet wurden, beispielsweise wie lange das Aushandeln eines Übertragungswegs gedauert hat, Bezugsziffer 38, wie lange es gedauert hat, bis dies fehlgeschlagen ist, Bezugsziffer 40 sowie den Grund für den Fehlschlag, Bezugsziffer 42.

## Patentansprüche

1. System aus einem Mobilfunksystem mit mindestens einer ersten und einer zweiten Basisstation (10) und mindestens einer Analysevorrichtung (20), wobei die erste und die zweite Basisstation (10) jeweils mindestens eine Antenne zur Kommunikation mit mindestens einem mobilen Teilnehmer (MT) über eine Luftschnittstelle (Uu) umfassen, wobei die Kommunikation mit einem mobilen Teilnehmer (MT) durch Luftschnittstellenparameter charakterisiert ist, wobei die erste und die zweite Basisstation (10) über einen Transportkanal (12) mit zumindest einem übergeordneten Netzelement (MME; 16) des Mobilfunksystems vernetzt sind, wobei mindestens ein Betriebsparameter in der ersten und der zweiten Basisstation (10) in Form mindestens eines Basisstationsparameters und/oder mindestens eines Luftschnittstellenparameters vorliegt, wobei auf dem Transportkanal (12) eine erste logische Schnittstelle (22) abgebildet ist, die ausgelegt ist, zumindest die erste und die zweite Basisstation (10) mit einem übergeordneten Netzelement (MME; 16) zu vernetzen, sowie eine zweite logische Schnittstelle (24), die ausgelegt ist, zumindest die erste mit der zweiten Basisstation (10) zu vernetzen,
**dadurch gekennzeichnet,**
**dass** die Analysevorrichtung (20) mit dem Transportkanal (12) gekoppelt ist, und dass auf dem Transportkanal (12) eine dritte logische Schnittstelle (26) abgebildet ist, die ausgelegt ist, den zumindest einen Betriebsparameter der mindestens einen Basisstation (10) an die Analysevorrichtung (20) zu übertragen.

2. System nach Anspruch 1,
**dadurch gekennzeichnet,**
**dass** mindestens einer Basisstation (10) ein Messdatenmodul (18) zugeordnet ist, das mit dem Transportkanal (12) gekoppelt ist, wobei das Messdatenmodul (18) ausgelegt ist, den zumindest einen Betriebsparameter der zugeordneten Basisstation (10) auszukoppeln und an der dritten logischen Schnittstelle (26) bereitzustellen.

3. System nach einem der Ansprüche 1 oder 2,
**dadurch gekennzeichnet,**
**dass** das jeweilige Messdatenmodul (18) in die jeweilige Basisstation (10) integriert ist.

4. System nach einem der Ansprüche 1 oder 2,
**dadurch gekennzeichnet,**
**dass** das Messdatenmodul (18) außerhalb der Basisstation (10) angeordnet ist.

5. System nach einem der vorhergehenden Ansprüche,
**dadurch gekennzeichnet,**
**dass** der Transportkanal (12) IP-basiert ist.

6. System nach einem der vorhergehenden Ansprüche,
**dadurch gekennzeichnet,**
**dass** die Analysevorrichtung (20) ausgelegt ist, über die dritte logische Schnittstelle (26) mindestens einen Filterungsparameter (30; 32; 34; 36; 38; 40; 42) an die Basisstation (10) und/oder das Messdatenmodul (18) zu übermitteln, wobei der Filterungsparameter (30; 32; 34; 36; 38; 40; 42) ausgelegt ist, den mindestens einen an die Analysevorrichtung (20) zu übertragenden Betriebsparameter zu spezifizieren.

7. System nach Anspruch 6,
**dadurch gekennzeichnet,**
**dass** mindestens ein Filterungsparameter mindestens ein bestimmtes Informationselement der Betriebsparameter betrifft.

8. System nach einem der Ansprüche 6 oder 7,
**dadurch gekennzeichnet,**
**dass** mindestens ein Filterungsparameter mindestens einen bestimmten Nachrichtentyp der Betriebsparameter betrifft.

9. System nach einem der Ansprüche 6 bis 8,
**dadurch gekennzeichnet,**
**dass** mindestens ein Filterungsparameter mindestens einen bestimmten Nachrichtennamen (34) der Betriebsparameter betrifft.

10. System nach einem der vorhergehenden Ansprüche,
**dadurch gekennzeichnet,**
**dass** das Messdatenmodul (18) ausgelegt ist, mindestens einen Betriebsparameter auszuwerten und/oder weiterzuverarbeiten, insbesondere daraus mindestens einen Key Performance Indicator zu berechnen.

11. System nach Anspruch 10,
**dadurch gekennzeichnet,**
**dass** mindestens ein Filterungsparameter mindestens einen bestimmten Key Performance Indicator betrifft.

12. Messdatenmodul (18) für ein Mobilfunksystem mit mindestens einer ersten und einer zweiten Basisstation (10) und mindestens einer Analysevorrichtung (20),
**dadurch gekennzeichnet,**
**dass** das Messdatenmodul (18) ausgelegt ist, mindestens einen Betriebsparameter einer dem Messdatenmodul (18) zuzuordnenden Basisstation (10) auszukoppeln und an einer Schnittstelle eines Transportkanals (12) an die mindestens eine Analysevorrichtung (20) bereitzustellen.

13. Analysevorrichtung (20) für ein Mobilfunksystem mit mindestens einer ersten und einer zweiten Basisstation (10),
**dadurch gekennzeichnet,**
**dass** die Analysevorrichtung (20) ausgelegt ist, mit mindestens einem einer Basisstation (10) zugeordnetem Messdatenmodul (18) über eine Schnittstelle eines Transportkanals (12) zur Übertragung mindestens eines Betriebsparameters der mindestens einen Basisstation (10) zu kommunizieren.

14. Verfahren zur Gewinnung mindestens eines Betriebsparameters eines Mobilfunksystems, das mindestens eine erste und eine zweite Basisstation (10) aufweist, wobei die erste und die zweite Basisstation (10) mindestens jeweils eine Antenne zur Kommunikation mit mindestens einem mobilen Teilnehmer (MT) über eine Luftschnittstelle (Uu) umfassen, wobei die Kommunikation mit einem mobilen Teilnehmer (MT) durch Luftschnittstellenparameter charakterisiert ist, wobei die erste und die zweite Basisstation (10) über einen Transportkanal (12) mit zumindest einem übergeordneten Netzelement (MME; 16) des Mobilfunksystems vernetzt sind, wobei mindestens ein Betriebsparameter in der ersten und der zweiten Basisstation (10) in Form mindestens eines Basisstationsparameters und/oder mindestens eines Luftschnittstellenparameters vorliegt, wobei auf dem Transportkanal (12) eine erste logische Schnittstelle (22) abgebildet ist, die ausgelegt ist, zumindest die erste und die zweite Basisstation (10) mit einem übergeordneten Netzelement (MME; 16) zu vernetzen, sowie eine zweite logische Schnittstelle (24), die ausgelegt ist, zumindest die erste mit der zweiten Basisstation (10) zu vernetzen,
**dadurch gekennzeichnet,**
**dass** zumindest ein Betriebsparameter der mindestens einen Basisstation (10) über eine dritte logische Schnittstelle (26) des Transportkanals (12) an eine mit dem Transportkanal (12) gekoppelte Analysevorrichtung (20) übertragen wird.
